# EUROPEAN PATENT APPLICATION

(11) **EP 1 798 789 A1**
(43) Date of publication of application: **20.06.2007**
(21) Application number: 05753351.5
(22) Date of filing: 22.06.2005
(51) Int. Cl.: H01M 4/06, H01M 4/52, H01M 4/62, H01M 6/08

(54) **ALKALINE CELL**

(30) Priority: 23.06.2004 JP 2004185023
(71) Applicant: MATSUSHITA ELECTRIC INDUSTRIAL CO., LTD., Osaka 571-8501 (JP)
(72) Inventor: SAWADA, Katsuya, Osaka-shi, Osaka 540-6319 (JP); OKADA, Tadaya, Osaka-shi, Osaka 540-6319 (JP); IZUMI, Hidekatsu, Osaka-shi, Osaka 540-6319 (JP); MUKAI, Yasuo, Osaka-shi, Osaka 540-6319 (JP); NOYA, Shigeto, Osaka-shi, Osaka 540-6319 (JP)
(74) Representative: TBK-Patent
(86) International application number: PCT/JP2005/011444
(87) International publication number: WO 2006/001302

(57) **Abstract**

An alkaline battery of this invention includes a positive electrode containing manganese dioxide powder and nickel oxyhydroxide powder with a mean particle size of 8 to 18 µm as positive electrode active materials and graphite powder with a mean particle size of 8 to 25 µm as a conductive material. The positive electrode contains 5 to 9 parts by weight of the graphite powder per 100 parts by weight of the positive electrode active materials.

## Description

### Technical Field

The present invention relates to alkaline batteries, and, more particularly, to positive electrode materials.

### Background Art

Recently, the performµance of small-sized electronic devices has been becoming increasing higher, and alkaline batteries which are used as power sources of such devices are required to provide high operating voltage and excellent large-current discharge characteristics.
To meet such demand, it has been proposed, for example, to add 3 to 10 parts by weight of graphite powder with a mean particle size of 8 to 30 µm per 100 parts by weight of positive electrode active materials composed of manganese dioxide powder and nickel oxyhydroxide powder with a mean particle size of 19 to 40 µm (e.g., Patent Document 1).

When nickel oxyhydroxide powder with a mean particle size of 19 to 40 µm is used as a positive electrode active material of a battery, the operating voltage becomes high and the heavy-load discharge characteristics are improved.
However, in the case of light-load discharge, the discharge performance is not improved so much, compared with that of alkaline batteries using only manganese dioxide as a positive electrode active material. This is because when an alkaline battery containing nickel oxyhydroxide is discharged with a light load, most of the nickel oxyhydroxide changes into nickel hydroxide having low conductivity at the final stage of the discharge, thereby resulting in a significant decrease in the electronic conductivity of the positive electrode. Contrary to this, when only manganese dioxide is used as a positive electrode active material, most MnO₂ changes into MnO_{1.5} in the final stage of discharge, but the conductivity of the positive electrode does not deteriorate significantly.
Patent Document 1: Japanese Laid-Open Patent Publication No. 2002-343346

### Disclosure of Invention

### Problem That the Invention Is to Solve

In order to solve the above-mentioned problem, it is therefore an object of the present invention to provide an alkaline battery with excellent light-load discharge characteristics by suppressing the deterioration of electronic conductivity of a positive electrode that contains manganese dioxide and nickel oxyhydroxide as positive electrode active materials in the final stage of discharge.

### Means for Solving the Problem

The present invention is directed to an alkaline battery including: a positive electrode comprising manganese dioxide powder and nickel oxyhydroxide powder as positive electrode active materials and graphite powder as a conductive material; a negative electrode comprising a zinc or zinc alloy powder as a negative electrode active material; a separator interposed between the positive electrode and the negative electrode; and an alkaline electrolyte. The graphite powder has a mean particle size of 8 to 25 µm, and the nickel oxyhydroxide powder has a mean particle size of 8 to 18 µm. The positive electrode contains 5 to 9 parts by weight of the graphite powder per 100 parts by weight of the positive electrode active materials.
The alkaline battery in accordance with claim 1, wherein the positive electrode contains the manganese dioxide powder and the nickel oxyhydroxide powder in a weight ratio of 10:90 to 80:20.

### Effects of the Invention

According to the present invention, when a positive electrode containing manganese dioxide and nickel oxyhydroxide as positive electrode active materials is used, the electron-conductive network of the positive electrode active materials is maintained favorably in the final stage of discharge. Therefore, alkaline batteries with excellent light-load discharge characteristics can be obtained.

### Brief Description of Drawings

FIG. 1 is a partially sectional front view of an exemplary alkaline battery of the present invention;
FIG. 2 is a graph showing the discharge performance of batteries in Experiment 1 of the present invention;
FIG. 3 is a graph showing the discharge performance of batteries in Experiment 2 of the present invention; and
FIG. 4 is a graph showing the discharge performance of batteries in Experiment 3 of the present invention.

### Best Mode for Carrying Out the Invention

In view of the situation in which findings on manganese dioxide as a positive electrode active material are not applicable to nickel oxyhydroxide, the present inventors have studied positive electrodes containing manganese dioxide and nickel oxyhydroxide as positive electrode active materials and tried to optimize the content and mean particle size of graphite powder serving as a conductive material and the mean particle size of the nickel oxyhydroxide powder as the positive electrode active material.

As a result, they have found, regarding alkaline batteries, that when the graphite powder has a mean particle size of 8 to 25 µm, the nickel oxyhydroxide powder has a mean particle size of 8 to 18 µm, and the positive electrode contains 5 to 9 parts by weight of the graphite powder per 100 parts by weight of the positive electrode active materials (the total of manganese dioxide powder and nickel oxyhydroxide powder), the conductive network among the active material particles becomes favorable and the deterioration of electronic conductivity between the nickel oxyhydroxide particles and the manganese dioxide particles is suppressed in the final stage of discharge, so that the resultant light-load discharge characteristics are superior to those when only manganese dioxide powder is used as a positive electrode active material.

If the mean particle size of the graphite powder is less than 8 µm, it becomes difficult to mold positive electrode pellets. If the mean particle size of the graphite powder exceeds 25 µm, the particle size of the graphite powder is too large relative to the particle size of the nickel oxyhydroxide powder, so that the electrode reaction is impeded, thereby resulting in degradation of discharge performance.

If the mean particle size of the nickel oxyhydroxide powder is less than 8 µm, it becomes difficult to mold positive electrode pellets, so that the discharge performance degrades. If the mean particle size of the nickel oxyhydroxide powder exceeds 18 µm, the electronic conductivity lowers in the final stage of discharge, so that the internal resistance rises and the discharge performance degrades.
Further, the mean particle size of the nickel oxyhydroxide powder is preferably 8 to 15 µm.

As used herein, the mean particle size of the graphite powder and the nickel oxyhydroxide powder is the particle size (D50) on a volume basis. The volume basis particle size (D50) refers to the particle size obtained when the ratio of the integrated volume to the total volume of a powder is 50% in a volume basis integration distribution of the powder.

Also, the volume basis particle size (D90) of the graphite powder is preferably 35 µm or less. The volume basis particle size (D90) of the nickel oxyhydroxide powder is preferably 23 µm or less. The volume basis particle size (D90) refers to the particle size obtained when the ratio of the integrated volume to the total volume of a powder is 90% in a volume basis integration distribution of the powder.

If the content of the graphite powder in the positive electrode is less than 5 parts by weight per 100 parts by weight of the positive electrode active materials, the effect as the conductive material becomes insufficient. If the content of the graphite powder in the positive electrode exceeds 9 parts by weight per 100 parts by weight of the positive electrode active materials, the amount of the positive electrode active materials decreases, so that the discharge performance degrades.

The positive electrode preferably contains the manganese dioxide powder and the nickel oxyhydroxide powder in a weight ratio of 10:90 to 80:20. That is, the weight ratio of the nickel oxyhydroxide powder to the manganese dioxide powder in the positive electrode is preferably 0.25 to 9.

The alkaline battery of the present invention includes the above-described positive electrode, a negative electrode that contains zinc or a zinc alloy as a negative electrode active material, a separator interposed between the positive electrode and the negative electrode, and an alkaline electrolyte.

The positive electrode used is, for example, a pelletized positive electrode mixture that comprises the above-mentioned manganese dioxide powder, nickel oxyhydroxide powder, graphite powder, and an alkaline electrolyte such as an aqueous potassium hydroxide solution.

The negative electrode used is, for example, a gelled negative electrode that comprises sodium polyacrylate serving as a gelling agent, an aqueous potassium hydroxide solution as an alkaline electrolyte, and a zinc powder or zinc alloy powder as a negative electrode active material. The zinc alloy powder used is, for example, a zinc alloy powder containing Al, Bi and In.

The separator used is, for example, a non-woven fabric composed mainly of polyvinyl alcohol fibers and rayon fibers.
Examples of the present invention are hereinafter described in detail.

### «Experiment 1»

### (1) Preparation of positive electrode mixture

Nickel oxyhydroxide powder with a mean particle size of 15 µm and manganese dioxide powder with a mean particle size of 35 µm, both of which serve as positive electrode active materials, and graphite powder serving as a conductive material were mixed together in a weight ratio of 50:50:6, and 100 parts by weight of the resultant mixture was mixed with 3 parts by weight of an alkaline electrolyte. The resultant mixture was fully stirred and compression molded into flakes. The alkaline electrolyte used was a 40% by weight aqueous potassium hydroxide solution. Subsequently, the positive electrode mixture flakes were crushed into granules, which were then classified into 10 to 100 mesh with a sieve. The obtained granules were compression molded into a hollow cylindrical shape, to obtain pelletized positive electrode mixtures. At this time, by varying the mean particle size of the graphite powder to 8, 10, 15, 25, and 30 µm, various positive electrode mixtures with different mean particle sizes of graphite powder were prepared.
It should be noted that the mean particle size (volume basis particle size (D50)) was measured by using a particle size distribution analyzer of laser-diffraction type.

### (2) Fabrication of alkaline battery

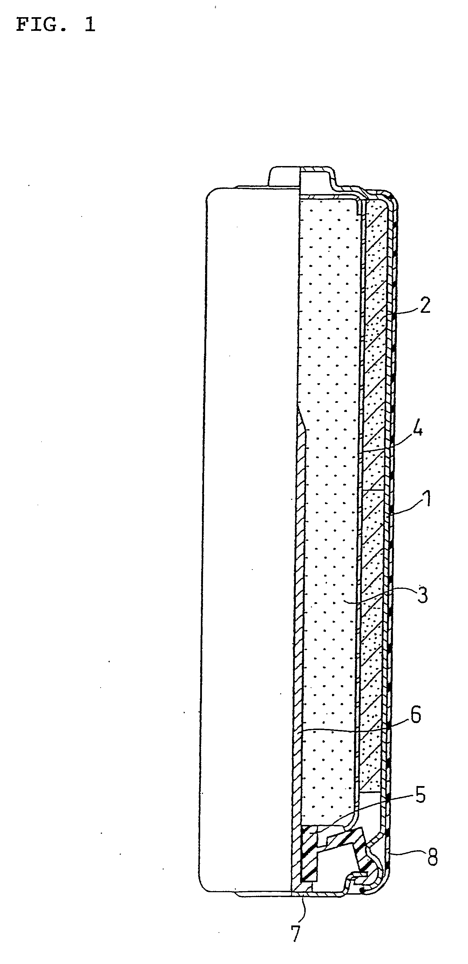

An AA-size alkaline battery with a structure as illustrated in FIG. 1 was produced in the following procedure. FIG. 1 is a partially sectional front view of the alkaline battery.
Two positive electrode mixtures 2 obtained in the above manner were inserted into a battery case 1, and the positive electrode mixtures 2 were remolded with a compression jig so as to closely adhere to the inner wall of the battery case 1. Thereafter, a cylindrical separator 4 with a bottom was disposed in the middle of the positive electrode mixtures 2 in the battery case 1, and a predetermined amount of a 40% by weight aqueous potassium hydroxide solution was injected into the separator 4 as the alkaline electrolyte. After the lapse of a predetermined time, a gelled negative electrode 3 was filled into the separator 4.

The gelled negative electrode 3 used was a gel composed of 1 part by weight of sodium polyacrylate serving as a gelling agent, 33 parts by weight of a 40% by weight aqueous potassium hydroxide solution as the alkaline electrolyte, and 66 parts by weight of zinc alloy powder containing A1, Bi and In. The zinc alloy used contains A1, Bi, and In at 35, 250, and 500 ppm, respectively. The separator 4 used was a non-woven fabric composed mainly of polyvinyl alcohol fibers and rayon fibers.

Subsequently, a negative electrode current collector 6 was inserted into the center of the gelled negative electrode 3. The negative electrode current collector 6 was preliminarily combined with a gasket 5 and a bottom plate 7 serving as the negative electrode terminal. The open edge of the battery case 1 was crimped onto the circumference of the bottom plate 7 with the edge of the gasket 5 interposed therebetween, to seal the opening of the battery case 1. Lastly, the outer surface of the battery case 1 was covered with an outer label 8. In this way, alkaline batteries 1 to 5 were obtained.

For comparison, a battery using only manganese dioxide as a positive electrode active material was produced in the following manner.
Manganese dioxide powder with a mean particle size of 35 µm and graphite powder were mixed together in a ratio of 100:6. Using this mixture, pelletized positive electrode mixtures were prepared in the same manner as the above. At this time, by varying the mean particle size of the graphite powder to 8, 10, 15, and 25 µm, various positive electrode mixtures with different mean particle sizes of graphite powder were prepared. Using these positive electrode mixtures, alkaline batteries 6 to 9 were produced in the same manner as the above.

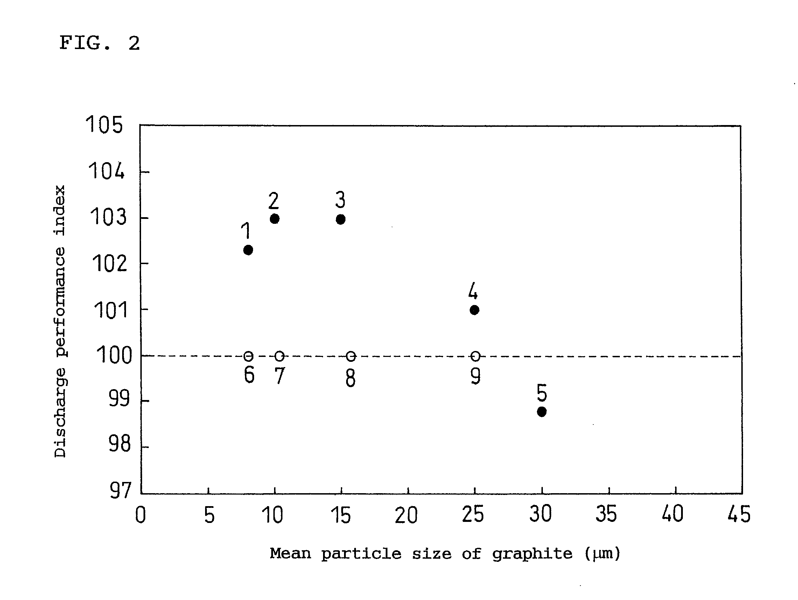

The batteries 1 to 9 were continuously discharged at 100 mA and the discharge duration on the light-load discharge was measured. The cut-off voltage was set to 0.9 V. FIG. 2 shows the results. In FIG. 2, the discharge performance index represents the index obtained by defining the discharge duration of the battery 9 as 100. In FIG. 2, ● represents the results of the batteries 1 to 5, and ○ represents the results of the batteries 6 to 9.

The batteries 6 to 9 exhibited almost the same discharge characteristics even when the mean particle size of the graphite powder was varied. Contrary to this, the batteries 1 to 4 with the mean particle sizes of graphite powder of 8 to 25 µm exhibited superior discharge characteristics to those of the batteries 6 to 9. In the case of the battery 5 with the mean particle size of graphite powder of more than 25 µm, the particle size of the graphite powder is too large relative to the particle size of the nickel oxyhydroxide powder, so that the electrode reaction was impeded and the discharge performance degraded.

### «Experiment 2»

Nickel oxyhydroxide powder, manganese dioxide powder with a mean particle size of 35 µm, and graphite powder with a mean particle size of 15 µm were mixed together in a ratio of 50:50:6. Using this mixture, pelletized positive electrode mixtures were prepared in the same manner as in Experiment 1. At this time, by varying the mean particle size of the nickel oxyhydroxide powder to 5, 8, 10, 15, 18, 20, 30, and 40 µm, various positive electrode mixtures with different mean particle sizes of nickel oxyhydroxide powder were prepared. Using these positive electrode mixtures, alkaline batteries 10 to 17 were produced in the same manner as in Experiment 1.

For comparison, a battery using only manganese dioxide as a positive electrode active material was produced in the following manner.
Manganese dioxide powder and graphite powder with a mean particle size of 15 µm were mixed together in a ratio of 100:6. Using this mixture, pelletized positive electrode mixtures were prepared in the same manner as in Experiment 1. At this time, by varying the mean particle size of the manganese dioxide powder to 20, 35, 47, and 60 µm, various positive electrode mixtures with different mean particle sizes of manganese dioxide powder were prepared. Using these positive electrode mixtures, alkaline batteries 18 to 21 were produced in the same manner as in Experiment 1.

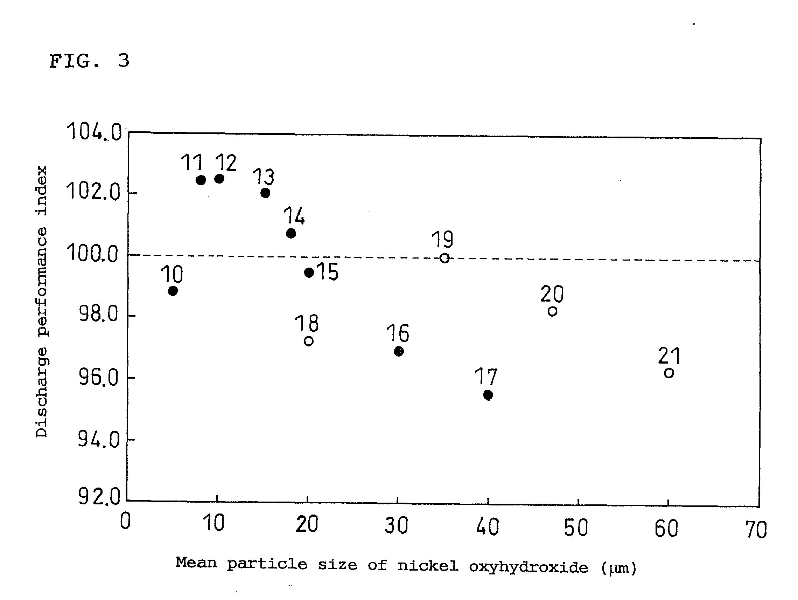

Using the batteries 10 to 21, the discharge duration was measured in the same manner as the above. FIG. 3 shows the results. In FIG. 3, the discharge performance index refers to the index obtained by defining the discharge duration of the battery 19 as 100. Also, in FIG. 3, ● represents the results of the batteries 10 to 17, and ○ represents the results of the batteries 18 to 21.

The batteries 11 to 14 with the mean particle sizes of nickel oxyhydroxide powder of 8 to 18 µm exhibited superior discharge performances to those of the batteries 18 to 21 using only the manganese dioxide powder as the active material. The battery 10 with the mean particle size of nickel oxyhydroxide powder of less than 8 µm exhibited a decline in discharge performance, since the poor moldablity of the positive electrode pellets resulted in poor conductive network among the active material particles and separation of part of the active material. The batteries 15 to 17 with the mean particle sizes of nickel oxyhydroxide powder of more than 18 µm exhibited declines in discharge performance, because the poor electronic conductivity in the final stage of discharge resulted in increased internal resistance. Further, since the batteries 11 to 13 had discharge performance indices of greater than 102, it has been found that the mean particle size of the nickel oxyhydroxide powder is more preferably 8 to 15 µm.

### <<Experiment 3>>

Nickel oxyhydroxide powder with a mean particle size of 10 µm, manganese dioxide powder with a mean particle size of 35 µm, and graphite powder with a mean particle size of 15 µm were mixed together. Using this mixture, pelletized positive electrode mixtures were prepared in the same manner as Experiment 1. At this time, the nickel oxyhydroxide powder and the manganese dioxide powder were mixed together in a weight ratio of 1:1, and the amount of the added graphite powder was varied to 4, 5, 6, 7, 8, 9, and 10 parts by weight per 100 parts by weight of the positive electrode active materials in order to prepare various positive electrode mixtures with different graphite powder contents. Using these positive electrode mixtures, alkaline batteries 22 to 28 were produced in the same manner as in Experiment 1.

For comparison, a battery using only manganese dioxide as a positive electrode active material was produced in the following manner.
Manganese dioxide powder with a mean particle size of 35 µm was mixed with graphite powder with a mean particle size of 15 µm serving as a conductive material. Using this mixture, pelletized positive electrode mixtures were prepared in the same manner as in Experiment 1. At this time, the amount of the added graphite powder was varied to 4, 5, 6, 7, 8, 9, and 10 parts by weight per 100 parts by weight of the manganese dioxide powder, to prepare various positive electrode mixtures with different graphite powder contents. Using these positive electrode mixtures, alkaline batteries 29 to 35 were produced in the same manner as in Experiment 1.

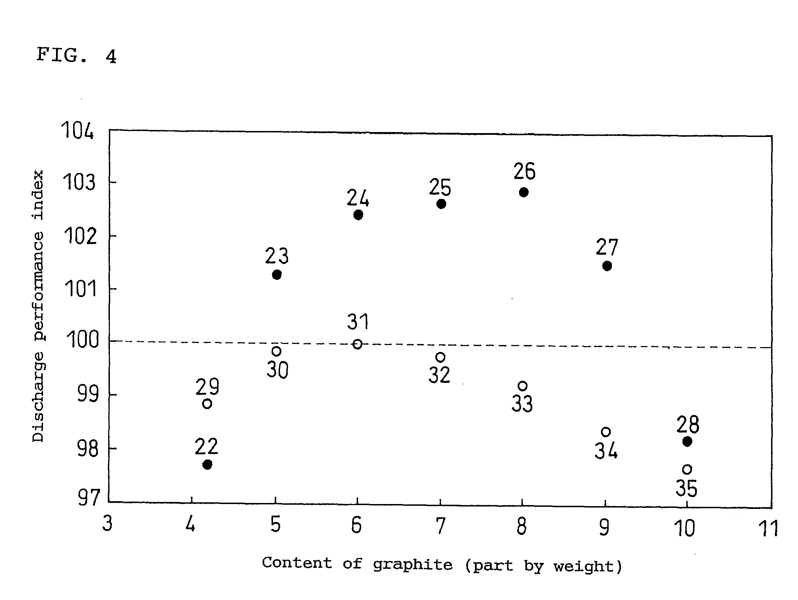

Using the batteries 22 to 35, the discharge duration was measured in the same manner as in Experiment 1. FIG. 4 shows the results. In FIG. 4, the discharge performance index refers to the index obtained by defining the discharge duration of the battery 31 as 100. Also, in FIG. 4, ● represents the results of the batteries 22 to 28, and ○ represents the results of the batteries 29 to 35.

The batteries 23 to 27, where the amounts of the added graphite powder are 5 to 9 parts by weight per 100 parts by weight of the total of nickel oxyhydroxide powder and manganese dioxide powder, exhibited superior discharge performances to those of the batteries 29 to 35 using only the manganese dioxide as the active material. When the amount of the added graphite powder is less than 5 parts by weight per 100 parts by weight of the total of nickel oxyhydroxide powder and manganese dioxide powder, the effect as the conductive material became insufficient, so that the discharge performance degraded. The battery 28, where the amount of the added graphite exceeds 9 parts by weight per 100 parts by weight of the total of nickel oxyhydroxide powder and manganese dioxide powder, exhibited a decline in discharge performance because of the decrease in the amount of the positive electrode active material.

### Industrial Applicability

The alkaline battery of the present invention is preferably used as a power source for high performance electronic devices such as information devices and portable appliances.

## Claims

1. An alkaline battery including: a positive electrode comprising manganese dioxide powder and nickel oxyhydroxide powder as positive electrode active materials and graphite powder as a conductive material; a negative electrode comprising a zinc or zinc alloy powder as a negative electrode active material; a separator interposed between said positive electrode and said negative electrode; and an alkaline electrolyte,
wherein said graphite powder has a mean particle size of 8 to 25 µm,
said nickel oxyhydroxide powder has a mean particle size of 8 to 18 µm, and
said positive electrode contains 5 to 9 parts by weight of the graphite powder per 100 parts by weight of the positive electrode active materials.

2. The alkaline battery in accordance with claim 1, wherein said positive electrode contains the manganese dioxide powder and the nickel oxyhydroxide powder in a weight ratio of 10:90 to 80:20.
